# EUROPEAN PATENT APPLICATION

(11) **EP 4 741 124 A1**
(43) Date of publication of application: **13.05.2026**
(21) Application number: 25187250.3
(22) Date of filing: 03.07.2025
(51) Int. Cl.: B26D 7/00, B26D 7/26, B26D 1/02, B26D 1/06, B26D 1/00

(54) **APPARATUS FOR MANUFACTURING SECONDARY BATTERY AND ELECTRODE PLATE CUTTING UNIT FOR SECONDARY BATTERY**

(30) Priority: 06.11.2024 KR 20240156599
(71) Applicant: SAMSUNG SDI CO., LTD., Yongin-si, Gyeonggi-do 17084 (KR)
(72) Inventor: KWON, Junhwan, 17084 Yongin-si (KR); KIM, Jinhwan, 17084 Yongin-si (KR); IM, Jongmin, 17084 Yongin-si (KR); KANG, Bonggeun, 17084 Yongin-si (KR)
(74) Representative: Marks & Clerk LLP

(57) **Abstract**

The present disclosure provides an apparatus for manufacturing a secondary battery and an electrode plate cutting unit for a secondary battery, in which, since a lower cutter is fixedly pressed using a high-strength spring, the lower cutter has good fixing strength and cutting precision is stably maintained, thereby preventing deintercalation of an active material when cutting an electrode plate and improving quality of a cut surface. The apparatus includes a transport unit configured to transport an electrode plate, which is a cutting target, along a transport path, a winding unit configured to receive and wind a cut electrode plate transported by the transport unit, and a cutting unit having an upper cutter installed above the transport path to move upwardly and downwardly, a fixing body fixed below the transport path to provide support strength, a lower cutter supported by the fixing body and configured to cut the electrode plate through cross motion with the upper cutter, and an elastic support elastically supporting the lower cutter toward the fixing body to maintain a fixed state of the lower cutter with respect to the fixing body.

## Description

### FIELD

The present disclosure relates to manufacturing a secondary battery, and more specifically, to an apparatus for manufacturing a secondary battery and an electrode plate cutting unit for a secondary battery.

### BACKGROUND

Secondary batteries are batteries that can be charged and discharged, unlike primary batteries that cannot be recharged. A secondary battery may generally include an electrode assembly including a positive electrode plate, a separator, and a negative electrode plate, a case (or a can) for accommodating the electrode assembly, a substrate tab formed by extending an uncoated portion of each electrode plate of the electrode assembly, an external terminal connected to the substrate tab, and the like.

The herein information disclosed in this Background section is for enhancement of understanding of the background of the present disclosure, and therefore, it may contain information that does not constitute a related (or prior) art.

### SUMMARY

The present disclosure is directed to providing an apparatus for manufacturing a secondary battery and an electrode plate cutting unit for a secondary battery, in which a lower cutter has good fixing strength and cutting precision is stably maintained, thereby preventing deintercalation of an active material when cutting an electrode plate and improving quality of a cut surface.

According to an aspect of the present disclosure, there is provided an apparatus for manufacturing a secondary battery, which includes a transport unit configured to transport an electrode plate, which is a cutting target, along a transport path, a winding unit configured to receive and wind a cut electrode plate transported by the transport unit, and a cutting unit having an upper cutter installed above the transport path to move upwardly and downwardly, a fixing body fixed below the transport path to provide support strength, a lower cutter supported by the fixing body and configured to cut the electrode plate through cross motion with the upper cutter, and an elastic support elastically supporting the lower cutter toward the fixing body to maintain a fixed state of the lower cutter with respect to the fixing body.

In some embodiments, the elastic support comprises: a horizontal extension shaft of which one end portion passes through the lower cutter to be coupled to the fixing body and which extends horizontally; a pressing spring surrounding the horizontal extension shaft; and a spring supporter which presses the pressing spring toward the lower cutter so that the pressing spring presses the lower cutter toward the fixing body.

In some embodiments, a screw portion is formed on the horizontal extension shaft, and the spring supporter comprises: a spring cover through which the horizontal extension shaft passes; and a pressing force control nut coupled to the screw portion to move the spring cover forwardly toward the pressing spring.

In some embodiments, a positioning guide part which guides a mounting position of the lower cutter with respect to the fixing body is formed between the fixing body and the lower cutter.

In some embodiments, the positioning guide part comprises: a positioning groove formed in a surface facing the lower cutter or the fixing body; and an insertion part formed on the fixing body or the lower cutter and fitted into the positioning groove.

In some embodiments, a plurality of guide grooves which are parallel to the horizontal extension shaft and open to face the spring cover are formed in the fixing body, and the spring cover is provided with a balancing arm extending horizontally while fixed to the spring cover and slidably inserted into the guide groove to prevent tilting of the spring cover.

In some embodiments, the elastic support comprises: a fixing bracket at a side opposite to the lower cutter while supported by the fixing body; and a pressing spring which is fitted in a compressed state between the fixing bracket and the lower cutter and elastically presses the lower cutter toward the fixing body while supported by the fixing bracket.

In some embodiments, a spacer which adjusts a gap between the fixing body and the fixing bracket is further provided between the fixing body and the fixing bracket.

In some embodiments, a spring pusher which presses the pressing spring toward the lower cutter is further installed on the fixing bracket.

In some embodiments, a female screw hole is formed in the fixing bracket, and the spring pusher comprises: a screw shaft screw-coupled to the female screw hole; a pushing disk provided on one end portion of the screw shaft to transmit a pressing force to the pressing spring; and a torque input unit which applies a shaft rotational force to the screw shaft. According to another aspect of the present disclosure, there is provided an electrode plate cutting unit for a secondary battery, which includes an upper cutter installed above an electrode plate that moves along a transport path, a fixing body fixed below the transport path to provide support strength, a lower cutter supported by the fixing body to cut the electrode plate through cross motion with the upper cutter, and an elastic support which elastically supports the lower cutter toward the fixing body to maintain a fixed state of the lower cutter with respect to the fixing body.

In some embodiments, the elastic support comprises: a horizontal extension shaft of which one end portion passes through the lower cutter to be coupled to the fixing body and which extends horizontally; a pressing spring surrounding the horizontal extension shaft; and a spring supporter pressing the pressing spring toward the lower cutter so that the pressing spring presses the lower cutter toward the fixing body.

In some embodiments, a screw portion is formed on the horizontal extension shaft, and the spring supporter comprises: a spring cover through which the horizontal extension shaft passes; and a pressing force control nut coupled to the screw portion to move the spring cover forwardly toward the pressing spring.

In some embodiments, a positioning guide part that guides a mounting position of the lower cutter with respect to the fixing body is formed between the fixing body and the lower cutter.

In some embodiments, the positioning guide part comprises: a positioning groove formed in a surface facing the lower cutter or the fixing body; and an insertion part formed on the fixing body or the lower cutter and fitted into the positioning groove.

In some embodiments, a plurality of guide grooves which are parallel to the horizontal extension shaft and open to face the spring cover are formed in the fixing body, and the spring cover is provided with a balancing arm extending horizontally while fixed to the spring cover and slidably inserted into the guide groove to prevent tilting of the spring cover.

In some embodiments, the elastic support comprises: a fixing bracket at a side opposite to the lower cutter while supported by the fixing body; and a pressing spring which is fitted in a compressed state between the fixing bracket and the lower cutter and elastically presses the lower cutter toward the fixing body while supported by the fixing bracket.

In some embodiments, a spacer which adjusts a gap between the fixing body and the fixing bracket is further provided between the fixing body and the fixing bracket.

In some embodiments, a spring pusher which presses the pressing spring toward the lower cutter is further installed on the fixing bracket.

In some embodiments, a female screw hole is formed in the fixing bracket, and the spring pusher comprises: a screw shaft screw-coupled to the female screw hole; a pushing disk provided on one end portion of the screw shaft to transmit a pressing force to the pressing spring; and a torque input unit which applies a shaft rotational force to the screw shaft.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The herein and other objects, features and advantages of the present disclosure will become more apparent to those of ordinary skill in the art by describing embodiments thereof in detail with reference to the accompanying drawings, in which:
FIG. 1 is a schematic view illustrating an electrode assembly of a secondary battery that may be manufactured using an apparatus for manufacturing a secondary battery according to embodiments of the present disclosure;
FIG. 2 is a view illustrating an interior of a pouch-type battery to which the electrode assembly of FIG. 1 is applied;
FIG. 3 is a cross-sectional view illustrating a cylindrical battery manufactured using the apparatus for manufacturing a secondary battery according to embodiments of the present disclosure;
FIG. 4 is a perspective view illustrating an exterior of a prismatic battery that may be manufactured using the apparatus for manufacturing a secondary battery according to embodiments of the present disclosure;
FIG. 5 is a cross-sectional view along line A-A in FIG. 4;
FIG. 6 is a view illustrating a basic configuration of the apparatus for manufacturing a secondary battery according to embodiments of the present disclosure;
FIG. 7 is a side view illustrating a state in which an upper cutter moves downwardly in a cutting unit illustrated in FIG. 6;
FIG. 8 is a cross-sectional view for describing an internal structure of the cutting unit of FIG. 7;
FIG. 9 is an exploded perspective view illustrating a modified example of the cutting unit of FIG. 7;
FIG. 10 is a view illustrating a modified example of the cutting unit illustrated in FIG. 9;
FIG. 11 is a cross-sectional view illustrating another example of the cutting unit according to embodiments of the present disclosure;
FIG. 12 is a view illustrating still another example of the cutting unit according to embodiments of the present disclosure;
FIG. 13 is a view illustrating a modified example of the cutting unit illustrated in FIG. 12; and
FIGS. 14 and 15 are views illustrating yet another example of the cutting unit according to embodiments of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

The electrode assembly accommodated in the case includes a stack type and a jelly roll type. The jelly roll type electrode assembly is manufactured by winding continuously supplied electrode plates using a winding device.

The winding device includes an electrode plate cutting machine. The electrode plate cutting machine is a device for cutting an electrode plate at a designed interval and includes an upper cutter and a lower cutter. The upper cutter is installed above a transport path of the electrode plate, the lower cutter is installed below the transport path, and the upper and lower cutters cut the electrode plate through cross motion.

The lower cutter is manually fixed using a bolt. For example, the lower cutter is in close contact with a fixing structure and is bolt-coupled. However, the bolt-fixed lower cutter has disadvantages that fixing strength is weak and the bolt loosens slightly due to vibrations during operation. In addition, since the lower cutter is fixed manually, there is a difference in settings depending on an operator.

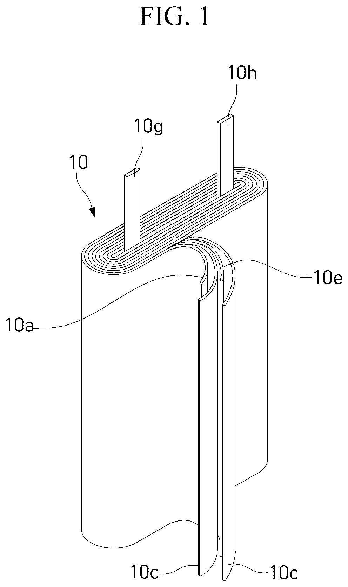

FIG. 1 is a schematic view illustrating an electrode assembly of a secondary battery which may be manufactured through an apparatus for manufacturing a secondary battery according to embodiments of the present disclosure.

An electrode assembly 10 may be formed by winding or stacking a first electrode plate 10a, a separator 10c, and a second electrode plate 10e, each of which are formed as thin plates or films.

In other embodiments, the electrode assembly 10 may be a stack type rather than a winding type, and the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack

In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 10a of the electrode assembly 10 may act as a negative electrode, and the second electrode plate 10e may act as a positive electrode. Of course, the reverse is also possible.

The first electrode plate 10a may be formed by applying (e.g., coating or depositing) a first electrode active material, such as graphite or carbon, onto a first electrode substrate formed of a metal foil, such as copper, a copper alloy, nickel, or a nickel alloy. The first electrode plate 10a may include a first electrode tab 10g (e.g., a first uncoated portion), which is a region to which the first electrode active material is not applied. The first electrode tab 10g may be connected to an external first terminal. In some embodiments, when the first electrode plate 10a is manufactured, the first electrode tab 10g may be formed by being cut in advance to protrude to (or protrude from) one side of the electrode assembly 10, or the first electrode tab 10g may protrude to one side of the electrode assembly 10 more than (e.g., farther than or beyond) the separator 10c without being separately cut.

The second electrode plate 10e may be formed by applying (e.g., coating or depositing) a second electrode active material, such as a transition metal oxide, onto a second electrode substrate formed of a metal foil, such as aluminum or an aluminum alloy. The second electrode plate 10e may include a second electrode tab 10h (e.g., a second uncoated portion), which is a region to which the second electrode active material is not applied. The second electrode tab 10h may be connected to an external second terminal. In some embodiments, the second electrode tab 10h may be formed by being cut in advance to protrude to the other side (e.g., the opposite side) of the electrode assembly 10 when the second electrode plate 10e is manufactured, or the second electrode tab 10h may protrude to the other side of the electrode assembly more than (e.g., farther than or beyond) the separator 10c without being separately cut.

The separator 10c prevents a short-circuit between the first electrode plate 10a and the second electrode plate 10e while allowing movement of lithium ions therebetween. The separator 10c may be made of, for example, a polyethylene film, a polypropylene film, a polyethylene-polypropylene film, or the like.

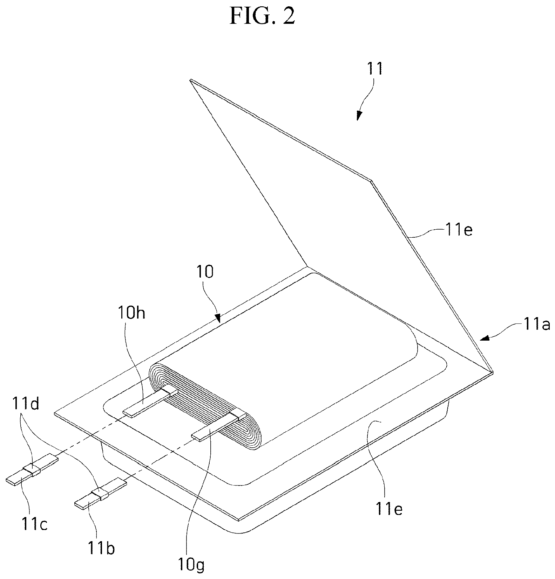

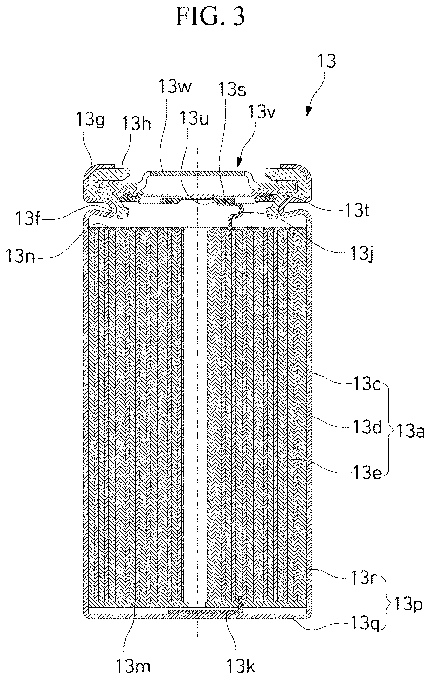

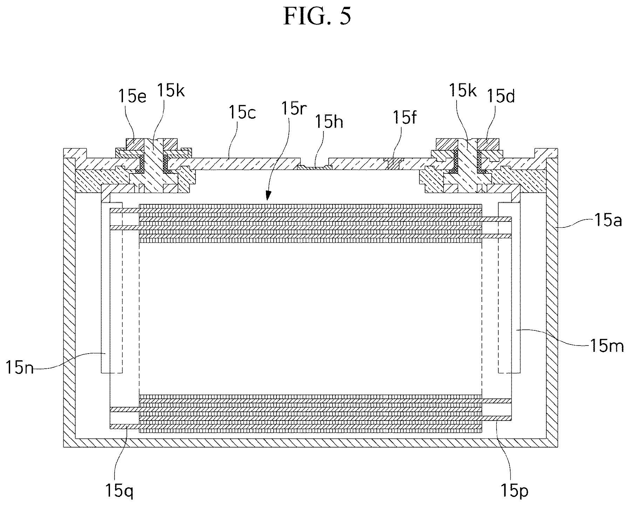

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 5).

A description is given of materials that can be used for the electrode plate of the herein electrode assembly.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the herein formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 is a view illustrating an interior of a pouch-type battery to which the electrode assembly of FIG. 1 is applied.

The pouch-type secondary battery 11 includes an electrode assembly 10 and a pouch 11a that accommodates the electrode assembly 10.

The electrode assembly 10 is the same as that illustrated in FIG. 1. The first electrode tab 10g and the second electrode tab 10h of the electrode assembly 10 may be electrically connected to respective external first and second terminal leads 11b and 11c by welding. Each of the first terminal lead 11b and the second terminal lead 11c may be attached with a tab film 11d for insulation from the pouch 11a.

The pouch 11a may be sealed by having sealing parts 11e at the edges thereof come into contact with each other with accommodating the electrode assembly 10 therein, in which case the sealing may be achieved with the tab film 11d interposed between the sealing parts 11e. The sealing parts 11e of the pouch 11a may each be made of a thermal fusion material that generally has weak adhesion to metal. Thus, it may be fused to the pouch 11a by interposing the thin tab film 11d between the sealing parts 11e.

FIG. 3 is a cross-sectional view illustrating a cylindrical battery manufactured through the apparatus for manufacturing a secondary battery according to embodiments of the present disclosure.

The cylindrical battery 13 includes an electrode assembly 13a, a case 13p accommodating the electrode assembly 13a and an electrolyte therein, a cap assembly 13v coupled to an opening of the case 13p to seal the case 13p, and an insulating plate 13n positioned between the electrode assembly 13a and the cap assembly 13v inside the case.

The electrode assembly 13a may include a separator 13d and a first electrode 13c and a second electrode 13e positioned with the separator interposed therebetween and may be wound in a jelly-roll shape.

The first electrode 13c includes a first substrate and a first active material layer on the first substrate. A first lead tab 13j may extend outwardly from a first uncoated portion of the first substrate at where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at where the second active material layer is not located, and the second lead tab 13k may be electrically connected to the case 13p. The first lead tab 13j and the second lead tab 13k may extend in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include graphite, for example.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) deformed inwardly may be formed in the body portion 13r, and a crimping part 13g (e.g., a crimp) bent inwardly may be formed at an open end of the body portion 13r.

The beading part 13f can reduce or prevent movement of the electrode assembly 13a inside the case 13p and can facilitate seating of the gasket 13h and the cap assembly 13v. The crimping part 13g may firmly fix the cap assembly 13v by pressing the edge of the cap assembly 13v against the gasket 13h. The case 13p may be formed of steel plated with nickel, for example.

The cap assembly 13v may be fixed to the inside of the crimping part 13g by the gasket 13h to seal the case 13p. The cap assembly 13v may include a cap up 13w, a safety vent 13s, a cap down 13t, an insulating member, and a subplate 13u, but is not limited to these examples and may be modified in various ways.

The cap up 13w may be positioned at the uppermost part of the cap assembly 13v. The cap up 13w may include a terminal part that protrudes upwardly and is connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent around the protrusion part.

When gas is generated due to overcharging or abnormal operation of the secondary battery, the protrusion part is deformed upwardly by the pressure and separates from the sub plate 13u while the safety vent 13s is cut (e.g., bursts or tears) along the notch. The cut safety vent 13s may prevent the secondary battery from exploding by allowing for the gas to be discharged to the outside.

The cap down 13t may be below the safety vent 13s. The cap down 13t may have a first opening for exposing the protrusion part of the safety vent 13s and a second opening for gas discharge. The insulating member may be positioned between the safety vent 13s and the cap down 13t to insulate the safety vent 13s and the cap down 13t.

The sub plate 13u may be under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s, the cap down 13t, and the sub plate 13u may be electrically connected to the first electrode 13c of the electrode assembly 13a.

The insulating plate 13n may be positioned to be in contact with the electrode assembly 13a below the beading part 13f. The insulating plate 13n may have a tab opening through which the first lead tab 13j is drawn out. The cap assembly 13v, which is electrically connected to the first electrode 13c by the first lead tab 13j, may face the electrode assembly 13a with the insulating plate 13n interposed therebetween and may maintain a state of being insulated (e.g., electrically insulated) from the electrode assembly 13a by the insulating plate. Meanwhile, another insulating plate 13m may be included for insulation between the electrode assembly 13a and the bottom portion 13q of the case 13p.

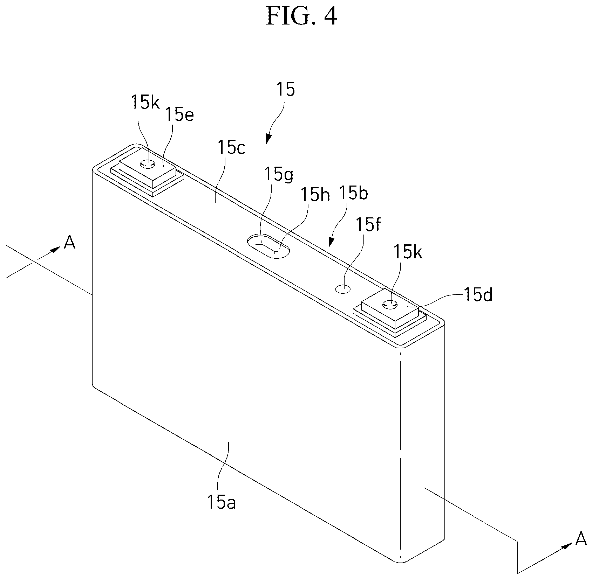

FIG. 4 is a perspective view illustrating an exterior of a prismatic battery which may be manufactured through the apparatus for manufacturing a secondary battery according to embodiments of the present disclosure.

A case 15a forms the overall appearance of a prismatic battery and may be formed of a conductive metal such as aluminum, aluminum alloy, or nickel-plated steel. **In** addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a first terminal 15d and a second terminal 15e may be electrically connected to respective positive and negative (or negative and positive) electrodes inside the case 15a, and may be installed to protrude outward through the cap plate 15c.

An electrolyte inlet 15f may be formed in the cap plate 15c, a gas discharge hole 15g may be opened, and a vent, i.e., a gas discharge device 15h may be connected to the gas discharge hole 15g. The gas discharge device 15h is opened by gas generated inside the battery and performs a degassing function.

FIG. 5 is a cross-sectional view along line A-A in FIG. 4.

An electrode assembly 15r may be formed by winding or stacking a first electrode plate, a separator, and a second electrode plate. When the electrode assembly 15r is a wound type, a winding axis may be parallel to the longitudinal direction of the case. In some other embodiments, the electrode assembly 15r is a stack type rather than a winding type. The shape of the electrode assembly 15r is not limited in the present disclosure.

In addition, the electrode assembly 15r may be a Z-stack electrode assembly in which a positive electrode plate and a negative electrode plate are inserted into both sides of a separator, which is then bent into a Z-stack. In addition, one or more electrode assemblies 15r may be stacked such that long sides of the electrode assemblies are adjacent to each other and accommodated in the case, and the number of electrode assemblies in the case is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 13p (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode tab 15q may protrude to the other side of the electrode assembly more than (e.g., farther than or beyond) the separator without being separately cut.

In FIG. 5, the first electrode tab 15p and the second electrode tab 15q are illustrated as being positioned on the right side and the left side of the electrode assembly 15r, respectively. However, in some other embodiments, both the first electrode tab 15p and the second electrode tab 15q may be positioned together on the right side or the left side of the electrode assembly 15r.

Here, the left side and the right side of the electrode assembly 15r are based on the battery illustrated in FIG. 5 for convenience of explanation. The left side refers to the side of the vertical surface of the electrode assembly 15r to which the second current collector 15n is joined, and the right side refers to the opposite side to which the first current collector 15m is joined. Therefore, the terms "left side" and "right side" of the electrode assembly 15r used herein may vary when the battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

As illustrated in FIG. 5, the first current collector 15m and the second current collector 15n are connected to the first terminal 15d and the second terminal 15e through connection members 15k, respectively. In some embodiments, the connection members 15k may each have an outer peripheral surface that is threaded, and may be fastened to the first terminal 15d and the second terminal 15e by screwing. However, the present disclosure is not limited thereto. For example, the connection members 15k may also be coupled to the first terminal 15d and the second terminal 15e by riveting or welding.

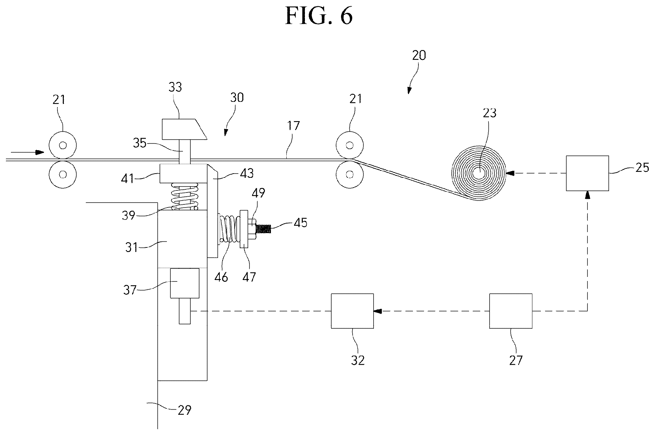

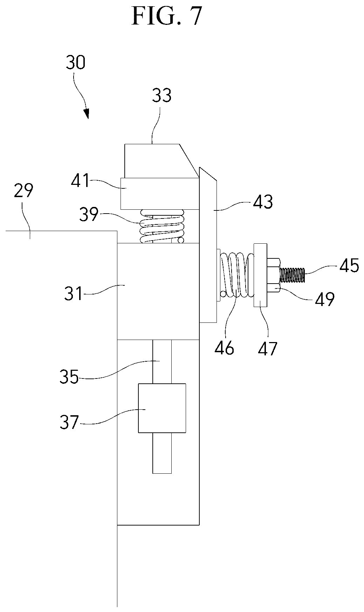

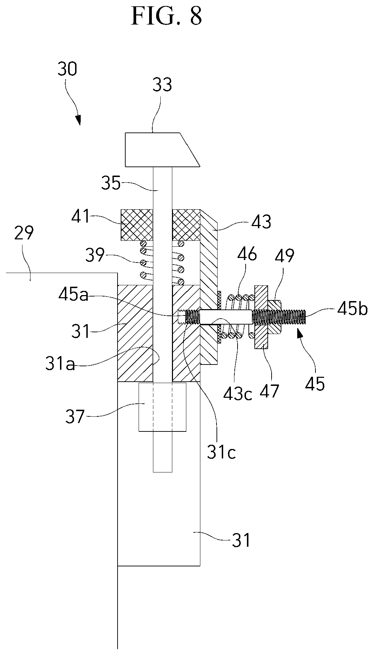

FIG. 6 is a view illustrating a basic configuration of the apparatus 20 for manufacturing a secondary battery according to embodiments of the present disclosure, and FIG. 7 is a side view illustrating a state in which an upper cutter moves downwardly in a cutting unit 30 illustrated in FIG. 6. In addition, FIG. 8 is a cross-sectional view for describing an internal structure of the cutting unit 30 of FIG. 7.

As illustrated, the apparatus 20 for manufacturing a secondary battery according to the present embodiment may include a transport unit, a winding unit 23, a winding unit driver 25, a control unit 27, and the cutting unit 30.

The transport unit may move an electrode plate 17, which is a cutting target, along a predetermined transport path. The transport unit may include a plurality of transport rollers 21. Some transport rollers are rollers having a driving force, and the remaining rollers do not have a driving force and may serve to only support the transport rollers tightly.

The electrode plate 17 has a predetermined width and is a stack formed of a substrate and a mixture. The electrode plate 17 may be continuously transported along the transport path provided by the transport unit, cut, and wound around the winding unit 23 in a cut state. The electrode plate 17 may be a negative electrode plate or a positive electrode plate.

The winding unit 23 may be rotated by power received from the winding unit driver 25 to wind the electrode plate 17. The electrode plate 17 wound around the winding unit 23 may be drawn out by an operator and moved to a subsequent process. The winding unit 23 may include a winding turret winding the electrode plate 17.

The winding unit driver 25 may be controlled by the control unit 27. The winding unit driver 25 may be operated by the control signal of the control unit 27 to rotate or not rotate the winding unit 23.

The control unit 27 may control the on/off and rotational speed of the winding unit driver 25. In addition, the control unit 27 may transmit the control signal to an upper cutter driving unit 32 so that the upper cutter driving unit 32 moves an upper cutter 33 downwardly to cut the electrode plate 17 through the cross motion of the upper cutter 33 and a lower cutter 43.

The cutting unit 30 may cut the electrode plate 17 being transported into a predetermined length unit. Since the jelly roll-type electrode assembly winds the electrode plate 17, a cutting length of the electrode plate 17 may vary depending on a diameter of the jelly roll being manufactured. The electrode plate 17 cut by the cutting unit 30 may be wound around the winding unit 23 and then drawn out to the outside.

The cutting unit 30 may include the upper cutter 33, a fixing body 31, the lower cutter 43, and an elastic support.

The upper cutter 33 is an element installed to move upwardly and downwardly above the electrode plate 17 moving along the transport path. A vertically extending elevation rod 35 may be fixed to a lower portion of the upper cutter 33. The elevation rod 35 is a vertically extending shaft as illustrated in FIG. 8. The elevation rod 35 may pass through a stripper 41 and a guide hole 31a of the fixing body 31, and then a lower end portion thereof may extend downwardly from the fixing body 31.

In addition, a stopper 37 may be fixed to the elevation rod 35. The stopper 37 may be caught on a lower surface of the fixing body 31 to limit a maximum rising height of the upper cutter 33. The elevation rod 35 may repeat upward and downward movements by power transmitted from the upper cutter driving unit 32. As the elevation rod 35 moves downwardly, the upper cutter 33 may cut the electrode plate 17 by performing the cross motion with the lower cutter 43. FIG. 7 illustrates a state in which the upper cutter 33 moves downwardly as much as possible.

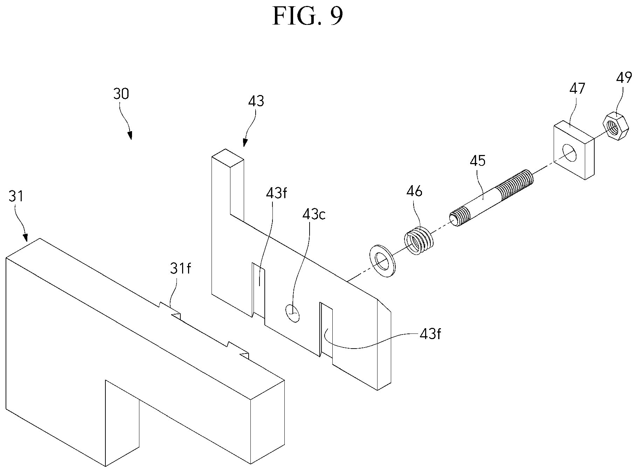

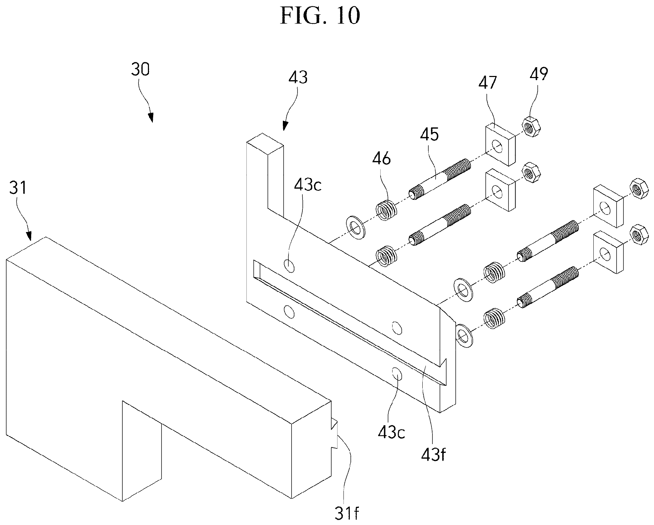

The fixing body 31 may be fixed below the transport path of the electrode plate 17 to support the elevation rod 35 to move upwardly and downwardly. The fixing body 31 may be fixed to a support structure 29. The support structure 29 is a structure included in the apparatus 20 for manufacturing a secondary battery and may support the fixing body 31. The cutting unit 30 is fixed to one side of the support structure 29. The structure of the fixing body 31 may be implemented in any of various ways as long as it may support the elevation rod 35 to move upwardly and downwardly and may have the shape illustrated in FIG. 9 or 10.

The stripper 41 and a support spring 39 may be installed above the fixing body 31. The stripper 41 is an element that elastically supports a lower surface of the electrode plate 17 when cutting the electrode plate 17. In addition, the support spring 39 may elastically support the stripper 41. The support spring 39 may elastically support the stripper 41 while supported on the fixing body 31.

The lower cutter 43 may be closely supported on a side surface of the fixing body 31 and may cut the electrode plate 17 through the cross motion with the upper cutter 33. The lower cutter 43 may maintain a state of being coupled to the fixing body 31 by the elastic support. The elastic support elastically supports the lower cutter 43 toward the fixing body 31 to maintain the state fixed of the lower cutter 43 with respect to the fixing body 31.

The elastic support may include a horizontal extension shaft 45, a pressing spring 46, and a spring supporter.

The horizontal extension shaft 45 may be coupled to the fixing body 31 after passing through the lower cutter 43. The horizontal extension shaft 45 may maintain a horizontal state while coupled to the fixing body 31. A shaft passage 43c (FIG. 8) through which the horizontal extension shaft 45 passes is formed in the lower cutter 43.

A first screw portion 45a and a second screw portion 45b may be formed on an outer circumferential surface of the horizontal extension shaft 45. The first screw portion 45a may be screw-coupled to a coupling hole 31c formed in the fixing body 31. The coupling hole 31c is a female screw hole formed in the side surface of the fixing body 31. The first screw portion 45a may be coupled to the coupling hole 31c to maintain the coupling of the horizontal extension shaft 45 to the fixing body 31. The second screw portion 45b is a portion to which a pressing force control nut 49 as a spring supporter is coupled. The spring supporter will be described herein.

The pressing spring 46 is a compression coil-type spring and surrounds the horizontal extension shaft 45. The pressing spring 46 may be compressed by a pressing force transmitted from the pressing force control nut 49. An elastic force of the compressed pressing spring 46 may be transmitted to the lower cutter 43 to press the lower cutter 43 toward the fixing body 31.

The spring supporter may press the pressing spring 46 toward the lower cutter 43 so that the pressing spring may press the lower cutter toward the fixing body 31. The lower cutter 43 pressed to the fixing body 31 may maintain a firmly fixed state due to the close-contact strength with the fixing body 31. The spring supporter may include a spring cover 47 and the pressing force control nut 49.

The spring cover 47 is a plate-shaped member in which the horizontal extension shaft 45 passes through a central portion thereof. The spring cover 47 may be positioned at a side opposite to the lower cutter 43 with the pressing spring 46 interposed therebetween.

In addition, the pressing force control nut 49 may move the spring cover 47 forward toward the pressing spring 46 while screw-coupled to the second screw portion 45b. By rotating the pressing force control nut 49, the pressing force control nut 49 may be positionally controlled in a longitudinal direction of the horizontal extension shaft 45. Accordingly, a gap between the lower cutter 43 and the spring cover 47 may be adjusted through the pressing force control nut 49. The narrower the gap between the lower cutter 43 and the spring cover 47, the greater the pressing force of the pressing spring 46, and the stronger coupling strength between the lower cutter 43 and the fixing body 31.

FIG. 9 is an exploded perspective view illustrating a modified example of the cutting unit 30 of FIG. 7.

A positioning guide part that guides a position of the lower cutter 43 mounted on the fixing body 31 may be formed between the fixing body 31 and the lower cutter 43. The positioning guide part may serve to precisely position the lower cutter 43 with respect to the fixing body 31.

The positioning guide part may include positioning grooves 43f and insertion parts 31f. The positioning groove 43f may be formed in a surface facing the lower cutter 43 or the fixing body 31, and the insertion part 31f may be formed on the fixing body 31 or the lower cutter 43. The facing surface may be a surface facing the fixing body 31 and the lower cutter 43 that face each other.

When the positioning groove 43f is formed in the lower cutter 43, the insertion part 31f may be formed on the fixing body 31. Conversely, when the positioning groove is formed in the fixing body, the insertion part may be formed on the lower cutter. As the insertion part 31f is fitted into the positioning groove 43f, the lower cutter 43 may be temporarily mounted on the fixing body 31.

As illustrated in FIG. 9, the positioning grooves 43f may be formed symmetrically at both sides of the shaft passage 43c. The positioning groove 43f may be a dovetail-shaped groove that extends vertically and has a closed upper portion. In addition, the insertion part 31f is a vertically extending protrusion that is inserted from the bottom to the top of the positioning groove 43f.

FIG. 10 is a view illustrating a modified example of the cutting unit illustrated in FIG. 9.

Referring to the drawing, a horizontally extending positioning groove 43f is formed in the lower cutter 43, and a horizontal insertion part 31f may be formed on a surface opposite to the fixing body 31. As the insertion part 31f is fitted into the positioning groove 43f, the lower cutter 43 may be coupled to the fixing body 31.

In addition, a plurality of shaft passages 43c may be formed in the lower cutter 43. Two shaft passages 43c may be disposed above and under the positioning groove 43f. The horizontal extension shaft 45 may be fitted into each shaft passage 43c.

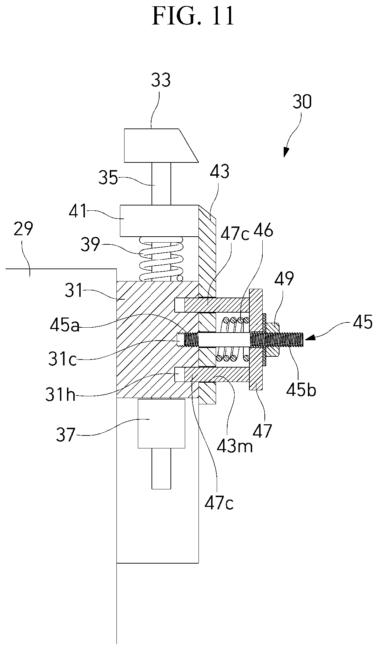

FIG. 11 is a cross-sectional view illustrating another example of the cutting unit 30 according to embodiments of the present disclosure.

As illustrated, guide grooves 31h may each be formed above and under the coupling hole 31c of the fixing body. The guide groove 31h is a straight groove that extends parallel to a center axis of the horizontal extension shaft 45 and is open to face the spring cover 47.

In addition, balancing arms 47c may be fixed to the spring cover 47. The balancing arm 47c is a member that extends horizontally while one end portion is fixed to the spring cover 47, passes through a through hole 43m of the lower cutter 43, and is then inserted into the guide groove 31h. The balancing arm 47c may slide in the guide groove 31h while inserted into the guide groove 31h. The balancing arm 47c may prevent tilting of the spring cover 47. That is, the balancing arm 47c prevents tilting of the spring cover 47 in a vertical state.

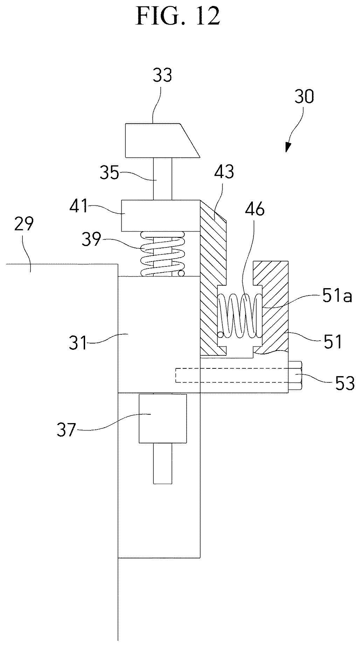

FIG. 12 is a view illustrating still another example of the cutting unit 30 according to embodiments of the present disclosure.

As illustrated, as an elastic support, a fixing bracket 51, a fixing bolt 53, and the pressing spring 46 may be included.

The fixing bracket 51 is a member that is coupled to the fixing body 31 through the fixing bolt 53 and may have an opposing portion 51a opposite to the lower cutter 43. The opposing portion 51a may be parallel to the lower cutter 43. The pressing spring 46 may be inserted in a compressed state between the opposing portion 51a of the fixing bracket 51 and the lower cutter 43 and may elastically press the lower cutter toward the fixing body 31 while supported by the fixing bracket.

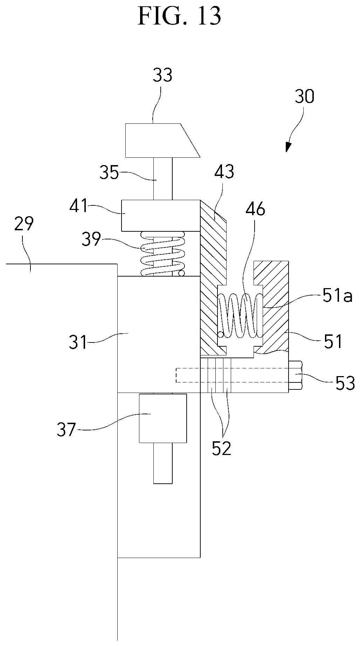

FIG. 13 is a view illustrating a modified example of the cutting unit 30 illustrated in FIG. 12.

As illustrated in FIG. 13, a plurality of spacers 52 may be applied between the fixing body 31 and the fixing bracket 51. The spacer 52 is a plate-shaped member having a predetermined thickness and may be applied in a state in which only one sheet is used or multiple sheets in a stacked state are. The spacer 52 is used to adjust a gap between the fixing bracket 51 and the fixing body 31. As the spacer 52 is applied, a gap between the opposing portion 51a and the lower cutter 43 increases, and the elasticity of the pressing spring 46 may also decrease. The elastic force of the pressing spring 46 may be controlled by adjusting the number of spacers 52 applied.

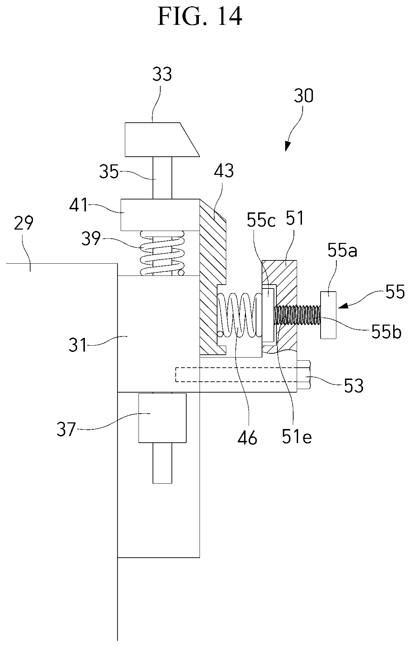

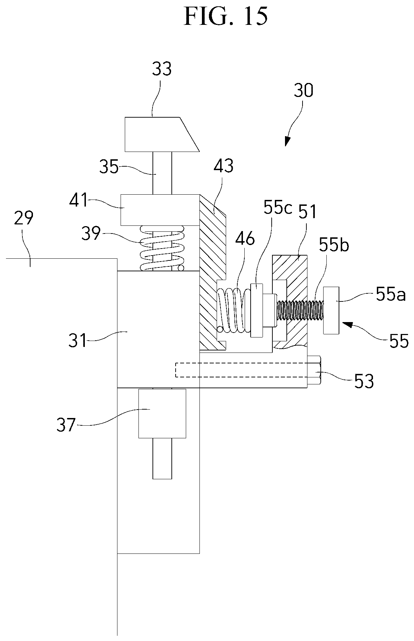

FIGS. 14 and 15 are views illustrating yet another example of the cutting unit 30 according to embodiments of the present disclosure.

As illustrated, a spring pusher 55 may be further included in the cutting unit 30. The spring pusher 55 may serve to press the pressing spring 46 toward the lower cutter. As illustrated in FIG. 15, when the pressing spring 46 is compressed by the spring pusher 55, the elastic force of the pressing spring 46 increases so that the lower cutter 43 may be fixed with stronger strength.

The spring pusher 55 may include a screw shaft 55b, a pushing disk 55c, and a torque input unit 55a. The screw shaft 55b is a round bar with screw threads formed on an outer surface thereof and may be screw-coupled to a female screw hole 51e of the fixing bracket 51. As the screw shaft 55b axially rotates, the screw shaft 55b may move forward toward the lower cutter 43 or move backward in an opposite direction.

The pushing disk 55c is a disk-shaped member installed on one end portion of the screw shaft 55b and may transmit a pressing force to the pressing spring 46. The pushing disk 55c may be in contact with one end of the pressing spring 46 and may provide the pressing force to the pressing spring 46. FIG. 14 illustrates a state in which the pushing disk 55c moves backward as much as possible. In contrast, FIG. 15 illustrates a state in which the pushing disk 55c moves toward the lower cutter 43 to compress the pressing spring 46.

The torque input unit 55a is, for example, a handle that may apply an axial rotation force to the screw shaft 55b. The operator may rotate the torque input unit 55a to set the pressing spring 46 to have an optimal elastic force.

According to an apparatus for manufacturing a secondary battery and an electrode plate cutting unit for a secondary battery formed as described herein, since a lower cutter is fixedly pressed using a high-strength spring, a lower cutter has good fixing strength and cutting precision is stably maintained, thereby preventing deintercalation of an active material when cutting an electrode plate and improving quality of a cut surface.

Although the present disclosure has been described herein with respect to embodiments thereof, the present disclosure is not limited thereto. Various modifications and variations can be made thereto by those skilled in the art within the scope of the present invention as defined by the appended claims and their equivalents.

## Claims

1. An apparatus for manufacturing a secondary battery, comprising:
a transport unit configured to transport an electrode plate, which is a cutting target, along a transport path;
a winding unit configured to receive and wind a cut electrode plate transported by the transport unit; and
a cutting unit having an upper cutter installed above the transport path to move upwardly and downwardly, a fixing body fixed below the transport path to provide support strength, a lower cutter supported by the fixing body and configured to cut the electrode plate through cross motion with the upper cutter, and an elastic support elastically supporting the lower cutter toward the fixing body to maintain a fixed state of the lower cutter with respect to the fixing body.

2. The apparatus as claimed in claim 1, wherein the elastic support comprises:
a horizontal extension shaft of which one end portion passes through the lower cutter to be coupled to the fixing body and which extends horizontally;
a pressing spring surrounding the horizontal extension shaft; and
a spring supporter configured to press the pressing spring toward the lower cutter so that the pressing spring presses the lower cutter toward the fixing body.

3. The apparatus as claimed in claim 2, wherein a screw portion is formed on the horizontal extension shaft, and
the spring supporter comprises:
a spring cover through which the horizontal extension shaft passes; and
a pressing force control nut coupled to the screw portion configured to move the spring cover forwardly toward the pressing spring.

4. The apparatus as claimed in any one of the preceding claims, wherein a positioning guide part which is configured to guide a mounting position of the lower cutter with respect to the fixing body is formed between the fixing body and the lower cutter.

5. The apparatus as claimed in claim 3, wherein a plurality of guide grooves which are parallel to the horizontal extension shaft and open to face the spring cover are formed in the fixing body, and
the spring cover is provided with a balancing arm extending horizontally while fixed to the spring cover and slidably inserted into the guide groove to prevent tilting of the spring cover.

6. The apparatus as claimed in claim 1, wherein the elastic support comprises:
a fixing bracket at a side opposite to the lower cutter while supported by the fixing body; and
a pressing spring fitted in a compressed state between the fixing bracket and the lower cutter and configured to elastically press the lower cutter toward the fixing body while supported by the fixing bracket.

7. An electrode plate cutting unit for a secondary battery, comprising:
an upper cutter installed above an electrode plate that is configured to move along a transport path;
a fixing body fixed below the transport path and configured to provide support strength;
a lower cutter supported by the fixing body and configured to cut the electrode plate through cross motion with the upper cutter; and
an elastic support which is configured to elastically support the lower cutter toward the fixing body to maintain a fixed state of the lower cutter with respect to the fixing body.

8. The electrode plate cutting unit as claimed in claim 7, wherein the elastic support comprises:
a horizontal extension shaft of which one end portion passes through the lower cutter such that it is coupled to the fixing body and which extends horizontally;
a pressing spring surrounding the horizontal extension shaft; and
a spring supporter pressing the pressing spring toward the lower cutter so that the pressing spring is configured to press the lower cutter toward the fixing body.

9. The electrode plate cutting unit as claimed in claim 8, wherein a screw portion is formed on the horizontal extension shaft, and
the spring supporter comprises:
a spring cover through which the horizontal extension shaft passes; and
a pressing force control nut coupled to the screw portion and configured to move the spring cover forwardly toward the pressing spring.

10. The electrode plate cutting unit as claimed in any one of claims 7 to 9, wherein a positioning guide part that is configured to guide a mounting position of the lower cutter with respect to the fixing body is formed between the fixing body and the lower cutter.

11. The electrode plate cutting unit as claimed in claim 10, wherein the positioning guide part comprises:
a positioning groove formed in a surface facing the lower cutter or the fixing body; and
an insertion part formed on the fixing body or the lower cutter and fitted into the positioning groove.

12. The electrode plate cutting unit as claimed in claim 9, wherein a plurality of guide grooves which are parallel to the horizontal extension shaft and open to face the spring cover are formed in the fixing body, and
the spring cover is provided with a balancing arm extending horizontally while fixed to the spring cover and slidably inserted into the guide groove to prevent tilting of the spring cover.

13. The electrode plate cutting unit as claimed in claim 7, wherein the elastic support comprises:
a fixing bracket at a side opposite to the lower cutter while supported by the fixing body; and
a pressing spring fitted in a compressed state between the fixing bracket and the lower cutter and configured to elastically press the lower cutter toward the fixing body while supported by the fixing bracket.

14. The electrode plate cutting unit as claimed in claim 13, wherein a spacer which is configured to adjust a gap between the fixing body and the fixing bracket is further provided between the fixing body and the fixing bracket.

15. The electrode plate cutting unit as claimed in claim 13 or claim 14, wherein a spring pusher which is configured to press the pressing spring toward the lower cutter is further installed on the fixing bracket.
